# EUROPÄISCHE PATENTSCHRIFT

(11) **EP 0 681 956 B1**
(45) Veröffentlichungstag und Bekanntmachung des Hinweises auf die Patenterteilung: **08.07.1998**
(21) Anmeldenummer: 95104876.8
(22) Anmeldetag: 01.04.1995
(51) Int. Cl.: B64C 1/00, B64D 11/00

(54) **Passagierflugzeug**
Aircraft for passenger transport
Avion pour le transport de passagers

(30) Priorität: 10.05.1994 DE 4416506
(43) Veröffentlichungstag der Anmeldung: 15.11.1995
(73) Patentinhaber: Daimler-Benz Aerospace Airbus Gesellschaft mit beschränkter Haftung, 21129 Hamburg (DE)
(72) Erfinder: Schliwa, Ralf, D-21739 Dollern (DE); Müller, Hans-Jürgen, D-24558 Henstedt-Ulzburg (DE); Sprenger, Wilfried, D-21698 Issendorf (DE)
(74) Vertreter: Hansmann, Dierk, Dipl.-Ing.

(56) Entgegenhaltungen:
- DE-A- 3 501 887
- DE-A- 4 116 524

## Beschreibung

Die Erfindung betrifft ein Passagierflugzeug mit einem annähernd kreisförmigen Rumpfquerschnitt.

Die Erhöhung der Transportkapazität von Passagieren in Flugzeugen ist bei dem immer steigenden Verkehrsaufkommen ein Problem, dessen Lösung die Flugzeughersteller intensiv beschäftigt.
So ist es bei Großraumflugzeugen bekannt, daß mehrere übereinander angeordnete Decks für Passagiereinrichtungen nutzbar gemacht werden. In der DE 41 16 524 A1 ist beschrieben, daß neben der Nutzung eines Oberdecks auch das Deck, dessen Fußboden der Rumpfunterschale am nächsten kommt (im folgenden Unterdeck genannt), zumindest teilweise für Passagiere genutzt wird. In einem solchen Großraumflugzeug ist der Rumpfquerschnitt ovalförmig gestaltet, was auch im Unterdeck ausreichende Stehhöhe für Passagiere gewährleistet.
Bei einem bisher üblichen, annähernd kreisförmigen Rumpfquerschnitt ist eine solche Nutzung des Unterdecks für Passagiere nicht möglich, da der Fußboden nur so tief liegt, daß noch eine größtmögliche nutzbare Breite zur Verfügung steht und gleichzeitig für die Frachtcontainer noch eine ausreichende Höhe vorhanden ist. In solchen bestehenden Unterdecks kann für die Passagiere oder Flugbegleiter keine vollwertige Stehhöhe gewährleistet werden.
Das Problem, in Flugzeugen mit einem annähernd kreisförmigen Rumpfquerschnitt in bekannter Größe im Unterdeck Passagierkabinenräume vorzusehen, ist somit seit langem unter anderem daran gescheitert, daß keine ausreichende Stehhöhe für Passagiere zur Verfügung gestellt werden konnte.

Wie auch die DE 35 01 887 A1 und die US 40 66 227 zeigen, ist es der Fachwelt bei derartigen Flugzeugen nicht geläufig, ein Unterdeck, das üblicherweise für den Frachttransport vorgesehen ist, zur Passagierbeförderung zu nutzen.

Demgemäß besteht die Erfindungsaufgabe darin, in einem Passagierflugzeug mit einem annähernd kreisförmigen Rumpfquerschnitt das Unterdeck so zu gestalten, daß zumindest bereichsweise eine für die Passagierbeförderung ausreichende Stehhöhe gewährleistet wird und gleichzeitig im Unterdeck ein funktionierendes Frachtladesystem erhalten bleibt.

Diese Aufgabe ist bei einem gattungsgemäßen Passagierflugzeug durch die im Patentanspruch 1 angegebenen Merkmale gelöst.

Insbesondere vorteilhaft ist, daß der Nutzraum in einem Flugzeug so optimiert wurde, daß in einem wahlweise als Frachtraum oder als Passagierraum genutztem Unterdeck für die betreffenden Passagierkabinenräume bzw. den Serviceeinrichtungen zumindest bereichsweise eine normale Stehhöhe gewährleistet wird. Durch den Erhalt eines funktionierenden Frachtladesystems im Unterdeck wird eine hohe Flexibilität in der wahlweisen Anordnung von Passagierräumen und Frachtladeräumen erreicht. So kann bei Bedarf die Sitzplatzkapazität effektvoll erhöht werden, wenn eine entsprechende Verringerung an Frachtladekapazität möglich ist. Eine Umrüstung eines Frachtraumes in einen Passagierraum ist mit minimalem Aufwand möglich.

Weiterbildungen und zweckmäßige Ausgestaltungen ergeben sich aus den Unteransprüchen 2 - 10.

Mit den Maßnahmen gemäß den Ansprüchen 3 und 4 wird gewährleistet, daß trotz der Absenkungen im Unterdeckboden die Tragstruktur erhalten bleibt. Für das Frachtladesystem funktionsnotwendige Bauteile können ebenfalls auf dem Unterdeckboden erhalten bleiben und so einen problemlosen Transport von Frachtcontainern ermöglichen.

Durch die Ausbildungen gemäß den Ansprüchen 5 und 6 oder 7, 8 und 9 wird erreicht, daß die Breite der Absenkung nicht durch den Abstand zweier Längsbahnen zueinander eingegrenzt wird. Somit ist es möglich, einen breiten Gang für Passagiere vorzusehen und im Anordnen von Passagiersitzen relativ große Freiräume zu besitzen. Durch das Einsetzen von Einlageelementen bzw. Modulen ist ein Umrüsten auf die entsprechende Nutzung für Passagiere oder Fracht ohne großen Aufwand erreicht.

Mit der Ausgestaltung gemäß Anspruch 10 werden sicherheitsrelevante Maßnahmen für einen Crashfall vorgesehen, die den notwendigen Überlebensraum bei der Nutzung des Unterdecks für den Passagiertransport gewährleisten.

Die Erfindung wird nachstehend beschrieben und anhand der Figuren 1 - 5 näher erläutert.

Es zeigen
- Fig. 1: ein Unterdeck in der Querschnittdarstellung, belegt mit Frachtcontainern in einer ersten Ausgestaltungsform,
- Fig. 2: das Unterdeck gemäß Fig. 1, belegt mit Passagierkabinenmodulen,
- Fig. 3: das Unterdeck in der Querschnittdarstellung, belegt mit mindestens einem Passagierkabinenmodul in einer zweiten Ausgestaltungsform,
- Fig. 4: das Unterdeck in der Querschnittdarstellung, belegt mit mindestens einem Passagierkabinenmodul in einer dritten Ausgestaltungsform und
- Fig. 5: das Unterdeck gemäß Fig. 4 in der Ausbildung als Frachtraum.

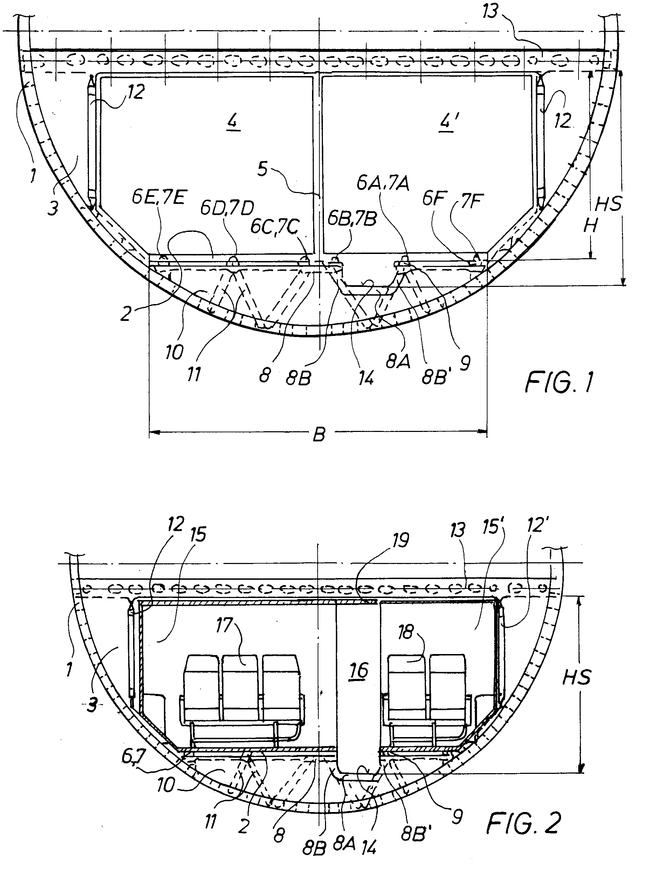

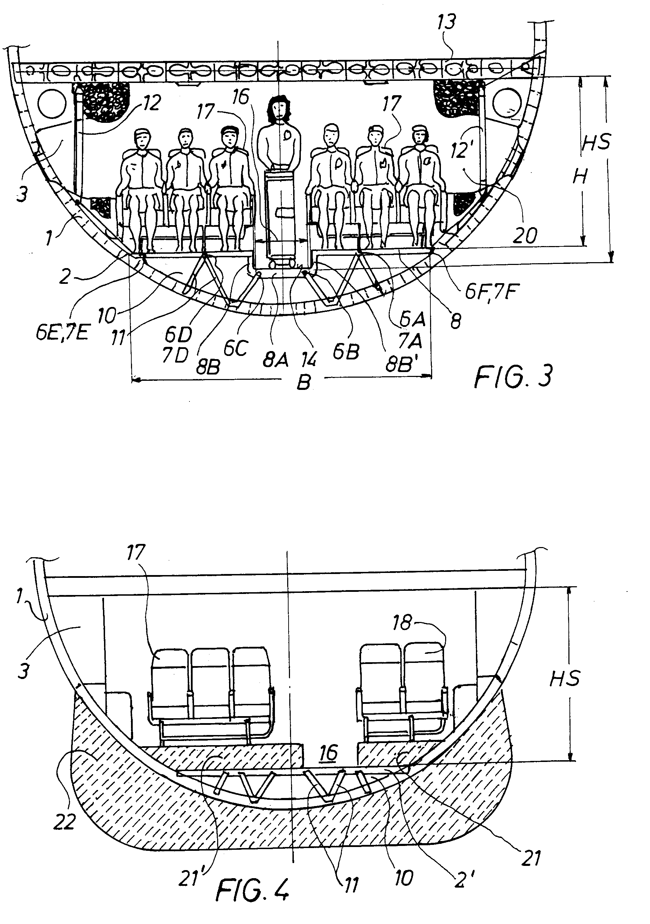

In Fig. 1 und den folgenden Fign. 2 und 3 ist jeweils ein Flugzeugrumpf im Querschnitt im Bereich der Rumpfunterschale 1 ersichtlich. Das Deck, dessen Fußboden 2 der Rumpfunterschale 1 am nächsten liegt - im folgenden Unterdeck 3 genannt - , ist als Frachtraum 5 ausgebildet und für den Transport von standardisierten Frachtcontainern 4, 4' vorgesehen. Der Fußboden 2 in der bestehenden, üblicherweise annähernd kreisförmigen Querschnittsform des Flugzeugrumpfes ist so tief angeordnet, daß eine für die zu transportierenden Frachtcontainer 4, 4' ausreichende Höhe H vorhanden ist. Damit ist gewährleistet, daß für den Frachtraum die größte nutzbare Breite B zur Verfügung steht.
Der Fußboden 2 ist als Teil eines bekannten Frachtladesystems gestaltet und besteht mit seinem Gerüst im wesentlichen aus mehreren Längsträgern 6A bis 6F, die vorzugsweise mit Rollenbahnen 7A bis 7F versehen sind, um ein leichtes Bewegen der Frachtcontainer 4, 4' im Frachtraum 5 zu erreichen. Mehrere Querträger 8 sind quer zu den Längsträgern 6A - 6F angeordnet und bilden mit den Längsträgern 6A - 6F ein gitterartiges Gerüst. Die Querträger 8 dienen der Abstützung des Frachtraumbodens 2 und sind an Kreuzungspunkten 9 mit den Längsträgern 6A - 6F verbunden. Im Flugzeugbau übliche Fußbodenplatten bilden neben den Rollenbahnen 7A bis 7F die begehbare Fläche des Fußbodens 2. Das Fußbodengerüst ist mittels einer aus Stützelementen 11 gebildeten Tragstruktur 10 abgestützt und mit der Rumpfunterschale 1 verbunden.

Mehrere Stützstangen 12, 12' die hauptsächlich das Oberdeckfußbodengerüst 13 tragen, sind im Unterdeck 3 so angeordnet, daß sie von der Rumpfmitte ausgehend soweit wie möglich außen angeordnet sind und so den nutzbaren Raum im Unterdeck nicht wesentlich beschränken.
Die Figur 1 zeigt nun das Unterdeck 3 mit einem darin angeordnetem Frachtraum 5. Um eine flexible und bedarfsgerechte Umrüstung mit Standardmodulen für die Passagiernutzung zu ermöglichen, ist es notwendig, im Unterdeck 3 Voraussetzungen zu schaffen, um eine normale Stehhöhe für Menschen ermöglichen, die entweder einen Sitzplatz, eine Schlafkabine, Serviceeinrichtungen oder dergleichen benutzen möchten.
Um dies zu realisieren, sind im Fußboden 2 bereichsweise Absenkungen eingebracht, die beispielsweise für einen Gang die notwendige Stehhöhe HS realisieren. Dazu verlaufen die Querträger 8 in dem für die Absenkung vorgesehenen Bereich annähernd u-förmig. Diese U-Form in vorzugsweise jedem Querträger 8 ist im wesentlichen zwischen zwei Längsträgern, beispielsweise Längsträgern 6A und 6B, eingebracht, um einerseits die für den Transport der Frachtcontainer 4, 4' notwendigen Rollenbahnen 7A - 7B beizubehalten und andererseits in Längsausdehnung des Unterdeckbodens 2 zumindest in den für die Umrüstung mit Modulen für die Passagierbenutzung vorgesehenen Bereichen eine Absenkung zu realisieren.
In dieser gezeigten Ausgestaltung bleiben die Kreuzungspunkte zwischen den Längs-und Querträgern 6 und 8 und damit die Krafteinleitungspunkte über die Stützelemente 11 in die Rumpfstruktur 1 erhalten. Die Seitenschenkel 8B, 8B' der U-Form sind deshalb in dieser Ausbildung der Lage der Stützelemente 11 angepaßt und bilden in ihrer Verlängerung eine V-Form. Der Querbalken der U-Form bildet den abgesenkten Querträgerteil 8A, der damit einen abgesenkten Fußboden 14 mit einer Stehhöhe HS ermöglicht.
Mit einer solchen Ausbildung des Unterdeckbodens 2 ist eine normale Nutzung des Unterdecks 3 als Frachtraum 5 ohne weiteres möglich. Da an den funktionsnotwendigen Teilen für das Frachtladesystem keine Veränderungen vorgenommen wurden, ist gegebenenfalls ein problemloser Transport der standardisierten Frachtraumcontainer 4, 4' realisierbar.

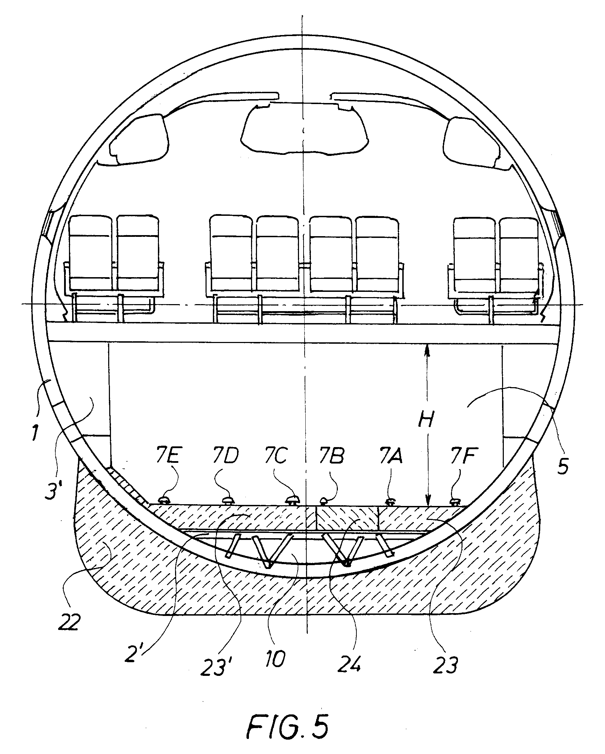

Im Bereich der Frachtladetore gibt es neben den Rollenbahnen 7A bis 7F für das Frachtladesystem notwendige Bauteile, wie beipielsweise Kugelmatten, die ein Querverschieben der Frachtcontainer 4, 4' zum Be- und Entladen ermöglichen. Um im abgesenkten Bereich des Fußbodens 14 diese funktionsnotwendigen Bauteile bereitzustellen sind Sondermodule in die Absenkung einzubringen, die in diesem Bereich einen ebenen Fußboden realisieren. Solche Sondermodule können wie das in der Erläuterung zu Fig. 5 erwähnte Zwischenmodul 24 ausgebildet und handhabbar sein.

Aus Fig. 2 ist zu entnehmen, daß das Unterdeck 3 gemäß Fig. 1 bei Bedarf zumindest bereichsweise für eine Passagiernutzung umgerüstet werden kann, indem statt der Frachtcontainer 4, 4' Passagiermodule 15, 15' im Unterdeck 3 angeordnet werden. Für eine solche Umrüstung werden die Passagiermodule 15, 15' an den vorgesehen Stellen im Unterdeck 3 angeordnet und fixiert. Im Bereich der Absenkung des Fußbodens 14 ist ein Gang 16 vorgesehen, der zwischen den Passagiermodulen 15 und 15' angeordnet ist. In diesem Ausführungsbeispiel ist das Passagiermodul 15 mit Dreiersitzen 17 und das Passagiermodul 15' mit Doppelsitzen 18 ausgestattet, wobei in Flugzeuglängsrichtung mehrere Sitzreihen möglich sind. Zwischen diesen Passagiermodulen 15, 15' ist eine Mindestbreite des Ganges 16 gewährleistet, um eine Begehbarkeit desselben zu ermöglichen. Dabei ist die Stehhöhe HS realisiert. Die Module 15, 15' enthalten alle, für eine Passagierkabine notwendigen Ausstattungsteile, nur im Bereich des Ganges 16 sind zusätzlich Verkleidungselemente, wie beispielsweise ein Deckenelement 19, vorgesehen.

Die Fig. 3 zeigt eine zweite Ausgestaltung des Unterdecks 3 in der Querschnittdarstellung, belegt mit einem Passagierkabinenmodul 20. Der Grundaufbau des Unterdecks 3 entspricht im wesentlichen dem in Fig. 1 beschriebenen Unterdeck 3. In dieser zweiten Ausgestaltung ist eine mittige Absenkung im Unterdeckboden 2 eingebracht. Dazu hat der Querträger 8 annähernd mittig einen u-förmigen Verlauf, wobei die Seitenschenkel 8B, 8B' des U's nahezu senkrecht stehen und der Querbalken des U's den abgesenkten, waagerecht verlaufenden Querträgerteil 8A bildet. Die Längsträger 6A bis 6F bilden mit den Querträgern 8 ein gitterartiges Gerüst, wobei aber im Gegensatz zum ersten Ausgestaltungsbeispiel entsprechend dem abgesenkten Querträgerteil 8A auch die Längsträger 6B und 6C abgesenkt und diese nicht mit Rollenbahnen 7B und 7C versehen sind. Damit ist eine Breite des Fußbodens im abgesenkten Bereich 14 realisierbar, die nicht durch den Abstand zweier Längsbahnen zueinander eingegrenzt ist. Im Passagiermodul 20 ist es somit möglich, einen breiten Gang 16' und beidseitig Passagiersitze 17, 17' anzuordnen. Im Bereich des Ganges 16' ist die Stehhöhe HS realisiert.

Eine solche Ausgestaltung ist einerseits möglich mit einer festen Installierung eines Passagierkabinenraumes 20 im Unterdeck 3, wenn neben dem mit einem Frachtladesystem ausgestatteten Frachtraum ein ständiger Passagierkabinenraum 20 gewählt wird. Andererseits ist eine Umrüstbarkeit auf das Frachtladesystem erreichbar, wenn das Passagierkabinenmodul 20 herausnehmbar ist und die fehlenden Rollenbahnen 7B und 7C nachgerüstet werden. Dies ist beispielsweise mittels Zusatzschienen oder Einlageelementen möglich, auf denen die Rollenbahnen befestigt werden.

In Fig. 4 ist das Unterdeck 3 in einer weiteren Ausgestaltungsform ersichtlich. Diese dritte Ausgestaltung zeigt einen insgesamt abgesenkten Unterdeckboden 2'. Dieser Unterdeckboden 2' ist aus einem aus Längs- und Querträgern bestehenden, gitterartigen Gerüst gebildet. Im Flugzeugbau übliche Fußbodenplatten bilden die begehbare Fläche des Unterdeckbodens 2'. Der Unterdeckboden 2' wird mittels einer aus Stützelementen 11 gebildeten Tragstruktur 10 abgestützt und mit der Rumpfunterschale 1 verbunden.

In diesem gegenüber den ersten Ausgestaltungen im gesamten Unterdeck 3 abgesenkten Boden 2' fehlen die für den Frachtcontainerbetrieb notwendigen Bauelemente, wie beispielsweise die Rollenbahnen, und die für das Frachtladesystem notwendige Breite. Der durch den abgesenkten Unterdeckboden 2' vergrößerter Nutzraum des Unterdecks 3, als eine Passagierkabine besitzt die normale Stehhöhe HS. Um einen Überlebensraum im Crashfall für die Passagiere bereitzustellen, ist eine energieabsorbierende Baueinheit 22 im wesentlichen außerhalb der Rumpfunterschale 1 angeordnet. Zur Erhöhung der Festigkeit sind Fußbodenmodule 21, 21', vorzugsweise aus energieabsorbierendem Matarial, am Unterdeckboden 2' fixiert. Diese Fußbodenmodule 21, 21' sind in den Sitzbereichen unterhalb der Dreiersitzreihen 17 und der Doppelsitzreihen 18 vorgesehen. Der dazwischen liegende Gang 16 wird nicht mit Fußbodenmodulen belegt, um die Stehhöhe HS nicht zu verkleinern.

Fig. 5 zeigt das Unterdeck 3' gemäß Fig. 4 in der Ausbildung als Frachtraum 5. Der vollständig abgesenkte Fußboden 2' mit den darunter liegenden Bauteilen entspricht der mit der Beschreibung zu Fig. 4 erläuterten Ausgestaltung. Die auf dem Unterdeckboden 2' angebrachten Plattenmodule sind entweder als Bodenplattenmodule 23, 23' ausgebildet, die die für das Frachtladesystem funktionsnotwendigen Bauteile enthalten, wie Rollenbahnen 7A bis 7F, und werden mit den Fußbodenmodulen 21, 21' ausgetauscht, oder die Fußbodenmodule 21, 21' können mit den notwendigen Rollenbahnen 7A bis 7F nachgerüstet werden. Ein Zwischenmodul 24, welches bedarfsweise ebenfalls mit zumindest einer Rollenbahn 7B ausgestattet ist, belegt den als Gang vorgesehenen Fußbodenbereich. Die Höhe der Module 23, 23' und 24 ist so gewählt, daß die für das Frachtladesystem notwendige Höhe H bei einer Ausnutzung der größtmöglichen Breite des Frachtraumes 5 erreicht wird.

Mit dieser Modulbauweise ist eine hohe Flexibilität in der Umrüstung von Fracht-in Passagierräume und umgekehrt erreicht. Die Befestigung der Module 21, 21' bzw. 23, 23' und 24 ist vorzugsweise als Steck- oder Schraubbefestigung realisiert, was schnelle Umrüstungen und damit geringe Montagezeiten bedeutet.

### Bezugszeichenliste

- 1: - Rumpfunterschale
- 2, 2': - Unterdeckboden
- 3, 3': - Unterdeck
- 4, 4': - Frachtcontainer
- 5: - Frachtraum
- 6A - 6F: - Längsträger
- 7A - 7F: - Rollenbahn
- 8: - Querträger
- 8A: - Abgesenkter Querträgerteil
- 8B, 8B': - Seitenschenkel
- 9: - Kreuzungspunkt
- 10: - Tragstruktur
- 11: - Stützelemente
- 12, 12': - Stützstangen
- 13: - Oberdeckfußbodengerüst
- 14: - Fußboden im abgesenkten Bereich
- 15, 15': - Passagiermodul als Halbmodul
- 16, 16': - Gang
- 17: - Dreiersitz
- 18: - Doppelsitz
- 19: - Deckenelement
- 20: - Passagierkabinenmodul in Komplettform
- 21, 21': - Fußbodenmodul
- 22: - energieabsorbierende Baueinheit
- 23, 23': - Bodenplattenmodul
- 24: - Zwischenmodul

## Patentansprüche

1. Passagierflugzeug mit einem annähernd kreisförmigen Rumpfquerschnitt, mit mindestens zwei übereinander angeordneten Decks, wobei das Unterdeck (3, 3') für ein Frachtladesystem für Frachtcontainer (4, 4') und ebenfalls für Passagierkabinenräume und/oder Serviceeinrichtungen (15, 15'; 20) vorgesehen ist,
im Unterdeck (3, 3') ein Unterdeckboden (2, 2') vorgesehen ist, der im wesentlichen aus einem gitterartigen Gerüst aus Längs- und Querträgern (6, 8) mit darauf angeordneten Fußbodenplatten besteht und **im Unterdeck (3, 3')** für das Frachtladesystem funktionsnotwendige Bauteile, wie Rollenbahnen (7A-7F), **vorsehbar sind**,
der Unterdeckboden (2, 2') von einer aus Stützelementen (11) gebildeten Tragstruktur (10) gestützt wird **und**
der Unterdeckboden (2, 2') **so tief angeordnet ist, daß für die zu transportierenden Frachtcontainer (4,4') ausreichende Höhe (H) und Breite (B) vorhanden sind und** zumindest bereichsweise so abgesenkt ist, daß in dem Bereich (14) eine Gesamthöhe des Unterdecks (3, 3') mindestens eine normale Stehhöhe (HS) von Personen gewährleistet und mindestens an einer Seite dieses Bereiches mindestens ein Modul für die Passagiernutzung (15, 15'; 20) anordenbar ist.

2. Passagierflugzeug nach Anspruch 1,
**dadurch gekennzeichnet, daß**
der Bereich (14) als Gang (16) für die Passagiernutzung vorsehbar ist.

3. Passagierflugzeug nach einem der Ansprüche 1 oder 2,
**dadurch gekennzeichnet, daß**
mindestens ein Querträger (8) zumindest in dem für eine Absenkung vorgesehenen Bereich (14) annähernd u-förmig verläuft, wobei die Seitenschenkel (8B, 8B') der U-Form in Richtung der Rumpfunterschale (1) verlaufen und der Querbalken der U-Form den abgesenkten, waagerecht verlaufenden Querträgerteil (8A) bildet.

4. Passagierflugzeug nach Anspruch 3,
**dadurch gekennzeichnet, daß**
die Querträger (8) jeweils im Bereich zwischen zwei Längsträgern (6A, 6B) u-förmig verlaufen, wobei die Seitenschenkel (8B, 8B') der U-Form dem Verlauf der Stützelemente (11) angepaßt sind und in der gedachten Verlängerung der Schenkel (8B, 8B') eine V-Form bilden.

5. Passagierflugzeug nach Anspruch 3,
**dadurch gekennzeichnet, daß**
die Querträger (8) annähernd mittig einen u-förmigen Verlauf besitzen, wobei die Seitenschenkel (8B, 8B') nahezu senkrecht stehen und zumindest ein Längsträger (6B, 6C) in seiner Längsausdehnung ebenfalls abgesenkt ist.

6. Passagierflugzeug nach Anspruch 5,
**dadurch gekennzeichnet, daß**
die Längsträger (6A - 6F) mit Rollenbahnen (7A - 7F) vorsehbar sind, wobei am abgesenkten Längsträger (6B, 6C) nur in der Ausbildung des Unterdecks als Frachtraum (5) mittels Einlageelementen, beispielsweise Zusatzschienen, zumindest eine Rollenbahn in Frachtraumbodenebene angeordnet ist.

7. Passagierflugzeug nach Anspruch 1,
**dadurch gekennzeichnet, daß**
der gesamte Unterdeckboden (2') soweit abgesenkt ist, daß eine Gesamthöhe des Unterdecks (3') mindestens eine normale Stehhöhe (HS) von Menschen entspricht, wobei mittels modulbauweise Fußbodenplatten das Unterdeck (3') als Frachtraum (5) oder als Passagierraum (20) ausbildbar ist.

8. Passagierflugzeug nach Anspruch 7,
**dadurch gekennzeichnet, daß**
am Unterdeckboden (2') außerhalb des Gangbereiches (16) Fußbodenmodule (21, 21') fixiert sind, wobei sie für die Module für die Passagiernutzung (15, 15') mit Befestigungsmitteln für Einrichtungsteile (17, 18) ausgestattet sind und für die Frachtraumnutzung für die Aufnahme von beispielsweise Rollenbahnen (7A bis 7F) vorgesehen sind und eine solche Höhe besitzen, daß eine Mindestbreite (B) für den Frachtraum gewährleistet ist.

9. Passagierflugzeug nach Anspruch 8,
**dadurch gekennzeichnet, daß**
der Gangbereich (16) zumindest mit einem Zwischenmodul (24) abdeckbar ist, wobei das Zwischenmodul (24) bedarfsweise für das Frachtladesystem funktionsnotwendige Bauteile enthält.

10. Passagierflugzeug nach einem der vorangegangenen Ansprüche,
**dadurch gekennzeichnet, daß**
eine energieabsorbierende Baueinheit (22) im wesentlichen außerhalb und unterhalb der Rumpfunterschale (1) angeordnet ist.

## Claims

1. Passenger aircraft with an approximately circular fuselage cross-section, with at least two decks disposed one above the other, wherein the lower deck (3, 3') is intended for a freight-loading system for freight containers (4, 4') and likewise for passenger cabin spaces and/or service installations (15, 15'; 20), there is provided, in the lower deck (3, 3'), a lower deck floor (2, 2') which substantially consists of a lattice-like framework of longitudinal and transverse girders (6, 8) with flooring panels disposed thereon, and there may be provided, in the lower deck (3, 3'), functionally necessary components, such as roller trains (7A-7F), for the freight-loading system, the lower deck floor (2, 2') is supported by a carrying structure (10) formed from supporting elements (11), and the lower deck floor (2, 2') is disposed at a depth such that sufficient height (H) and breadth (B) is available for the freight containers (4, 4') to be transported and is lowered, at least in certain regions, in such a way that, in the region (14), the overall height of the lower deck (3, 3') guarantees at least a normal standing height (HS) for persons and, at least on one side of this region, at least one module for passenger use (15, 15'; 20) can be disposed.

2. Passenger aircraft according to claim 1, characterised in that the region (14) may be intended as an aisle (16) for passenger use.

3. Passenger aircraft according to one of claims 1 or 2, characterised in that at least one transverse girder (8) extends in an approximately U-shaped manner, at least in the region (14) intended for lowering, the side arms (8B, 8B') of the U-shape extending in the direction of the lower shell (1) of the fuselage and the transverse bar of the U-shape forming the lowered, horizontally extending part (8A) of the transverse girder.

4. Passenger aircraft according to claim 3, characterised in that the transverse girders (8) extend in a U-shaped manner in each case in the region between two longitudinal girders (6A, 6B), the side arms (8B, 8B') of the U-shape being adapted to the path of the supporting elements (11) and forming a V-shape in the imaginary prolongation of the arms (8B, 8B').

5. Passenger aircraft according to claim 3, characterised in that the transverse girders (8) have, approximately in their centre, a U-shaped path, the side arms (8B,8B') standing virtually perpendicularly and at least one longitudinal girder (6B, 6C) being likewise lowered in its longitudinal extension.

6. Passenger aircraft according to claim 5, characterised in that the longitudinal girders (6A - 6F) can be provided with roller trains (7A - 7F), at least one roller train being disposed in the floor plane of the freight compartment at the lowered longitudinal girder (6B, 6C), but only when the lower deck is constructed as a freight compartment (5) by means of insert elements, for example additional rails.

7. Passenger aircraft according to claim 1, characterised in that the entire lower deck floor (2') is lowered to an extent such that the overall height of the lower deck (3') corresponds at least to a normal standing height (HS) for people, it being possible to construct the lower deck (3'), by means of flooring panels of modular design, as a freight compartment (5) or as a passenger compartment (20).

8. Passenger aircraft according to claim 7, characterised in that flooring modules (21, 21') are fixed to the lower deck floor (2'), outside the aisle region (16), the said flooring modules being equipped, for the modules for passenger use (15, 15'), with fastening means for installation parts (17, 18), and being intended, for freight compartment use, for receiving, for example, roller trains (7A to 7F), and possessing a height such that a minimum breadth (B) is guaranteed for the freight compartment.

9. Passenger aircraft according to claim 8, characterised in that the aisle region (16) can be covered at least with an intermediate module (24), the intermediate module (24) containing, if required, functionally necessary components for the freight-loading system.

10. Passenger aircraft according to one of the preceding claims, characterised in that an energy-absorbing structural unit (22) is disposed substantially outside and below the lower shell (1) of the fuselage.

## Revendications

1. Avion de passagers qui présente une section transversale de fuselage plus ou moins circulaire, avec au moins deux ponts superposés, le pont inférieur (3, 3') étant prévu pour un système de chargement de conteneurs d'usage courant (4, 4') et également pour des cabines de passagers et/ou des installations de service (15, 15'; 20), dans le pont inférieur (3, 3') étant prévu un fond (2, 2'), qui se compose principalement d'un cadre en forme de grille constitué de supports longitudinaux et transversaux (6, 8) surmontés de plaques de fond et des pièces de construction telles des pistes à rouleaux (7A-7F), nécessaires au fonctionnement du système de chargement pouvant être prévues dans le pont inférieur (3, 3'),
le fond (2, 2') du pont inférieur étant soutenu par une structure portante (10) formée par des éléments d'appui (11) et
le fond (2,2') du pont inférieur étant disposé à une profondeur telle que l'on dispose d'une hauteur (H) et d'une largeur (B) suffisantes pour les conteneurs d'usage courant (4, 4') à transporter, et ledit fond étant au moins partiellement abaissé de telle façon que dans la zone (14), on s'assure la hauteur totale du pont inférieur (3, 3'), au moins la hauteur normale (HS) de personnes se tenant debout et qu'au moins un module destiné à l'usage (15, 15'; 20) des passagers peut être disposé sur le côté de ladite zone.

2. Avion de passagers suivant la revendication 1,
caractérisé en ce que,
la zone (14) peut être prévue comme un couloir (16) destiné à l'usage des passagers.

3. Avion de passagers suivant l'une ou l'autre des revendications 1 ou 2,
caractérisé en ce que,
au moins un support transversal (8) s'étend approximativement en U du moins dans la zone (14) prévue pour l'abaissement, les branches latérales (8B, 8B') du U s'étendant dans la direction de la coque inférieure (1) du fuselage et la barre transversale du U formant le support transversal (8A) abaissé et horizontal.

4. Avion de passagers suivant la revendication 3,
caractérisé en ce que,
les supports transversaux (8) s'étendent en U dans la zone située entre deux supports longitudinaux (6A, 6B), les branches latérales (8B, 8B') du U étant adaptées au parcours des éléments d'appui (11) et formant un V dans le prolongement imaginaire des branches (8B, 8B').

5. Avion de passagers suivant la revendication 3,
caractérisé en ce que,
les supports transversaux (8) présentent plus ou moins en leur centre un parcours en U, les branches latérales (8B, 8B') étant presque perpendiculaires et au moins un support longitudinal (6B, 6C) étant abaissé dans son extension longitudinale.

6. Avion de passagers suivant la revendication 5,
caractérisé en ce que,
les supports longitudinaux (6A - 6F) peuvent être pourvus de pistes à rouleaux (7A - 7F), sur le support longitudinal (6B, 6C) abaissé étant disposée au moins une piste à rouleaux dans le plan du fond de l'espace à fret, uniquement lorsque le pont inférieur est conçu comme un espace à fret (5) au moyen d'inserts, par exemple de rails supplémentaires.

7. Avion de passagers suivant la revendication 1,
caractérisé en ce que,
tout le fond (2') du pont inférieur est abaissé jusqu'à ce que la hauteur totale du pont inférieur (3') corresponde au moins à la hauteur normale (HS) de personnes se tenant debout, le pont inférieur (3') pouvant être conçu comme un espace à fret (5) ou comme une cabine de passagers (20) au moyen de plaques de fond modulables.

8. Avion de passagers suivant la revendication 7,
caractérisé en ce que,
sur le fond (2') du pont inférieur, à l'extérieur du couloir (16), sont fixés des modules de fond (21, 21') qui sont équipés, pour les modules destinés à l'usage des passagers (15, 15'), de moyens de fixation pour les pièces d'installation (17, 18), et qui sont prévus pour l'utilisation dans l'espace à fret afin d'accueillir par exemple les pistes à rouleaux (7A à 7F) et présentent une hauteur telle qu'une largeur minimale (B) pour l'espace à fret est assurée.

9. Avion de passagers suivant la revendication 8,
caractérisé en ce que,
le couloir (16) peut au moins être recouvert d'un module intermédiaire (24), le module intermédiaire (24) comprenant, en cas de besoin, des pièces de construction nécessaires au fonctionnement du système de chargement du fret.

10. Avion de passagers suivant l'une ou l'autre des revendications ci-dessus,
caractérisé en ce que,
une unité (22) d'absorption d'énergie est disposée principalement à l'extérieur et sous la coque inférieure (1) du fuselage.
